# EUROPÄISCHE PATENTSCHRIFT

(11) **EP 0 920 584 B1**
(45) Veröffentlichungstag und Bekanntmachung des Hinweises auf die Patenterteilung: **29.01.2003**
(21) Anmeldenummer: 98933450.3
(22) Anmeldetag: 06.05.1998
(51) Int. Cl.: F02M 61/00

(54) **BRENNSTOFFEINSPRITZANLAGE**
FUEL INJECTION SYSTEM
INSTALLATION D'INJECTION DE CARBURANT

(30) Priorität: 25.06.1997 DE 19726990; 16.08.1997 DE 19735665
(43) Veröffentlichungstag der Anmeldung: 09.06.1999
(60) Teilanmeldung: 02017439.7
(73) Patentinhaber: ROBERT BOSCH GMBH, 70442 Stuttgart (DE)
(72) Erfinder: GMELIN, Karl, D-74223 Flein (DE)
(86) Internationale Anmeldenummer: DE9801246
(87) Internationale Veröffentlichungsnummer: WO99000595

(56) Entgegenhaltungen:
- US-A- 5 394 850
- PATENT ABSTRACTS OF JAPAN vol. 097, no. 003, 31. März 1997 & JP 08 312503 A (MITSUBISHI MOTORS CORP;MITSUBISHI AUTOMOB ENG CO LTD), 26. November 1996 in der Anmeldung erwähnt

## Beschreibung

### Stand der Technik

Die Erfindung betrifft eine Brennstoffeinspritzanlage zum direkten Einspritzen von Brennstoff in den Brennraum bzw. die Brennräume einer Brennkraftmaschine.

Die Erfindung geht aus von einer Brennstoffeinspritzanlage nach der Gattung des Anspruchs 1. Es ist bereits aus der JP-OS 08-312503 bekannt, an dem Zylinderkopf einer Brennkraftmaschine Aufnahmebohrungen für jeweils ein Brennstoffeinspritzventil für jeden Brennraum der Brennkraftmaschine vorzusehen, in welche jeweils ein Abspritzabschnitt des zugeordneten Brennstoffeinspritzventils zum direkten Einspritzen von Brennstoff in den jeweiligen Brennraum einsetzbar ist. Das in die Aufnahmebohrung des Zylinderkopfs eingesetzte Brennstoffeinspritzventil wird mittels einer als Spannpratze ausgebildeten Niederhaltevorrichtung gegen den in dem Brennraum herrschenden relativ hohen Verbrennungsdruck niedergehalten. Um die Brennstoffeinspritzventile in den Aufnahmebohrungen sicher zu fixieren, müssen durch die Spannpratzen relativ hohe Niederhaltekräfte auf die Brennstoffeinspritzventile ausgeübt werden, so daß die Brennstoffeinspritzventile in den Aufnahmebohrungen einen relativ festen, unverrückbaren Sitz haben. Für die Zuleitung des Brennstoffs an einen an jedem Brennstoffeinspritzventil vorgesehenen Zulaufabschnitt mit einer Brennstoff-Einlaßöffnung ist bei der JP-OS 08-312503 eine Brennstoff-Verteilerleitung vorgesehen, die die Brennstoffeinspritzventile mit einer Brennstoffpumpe verbindet. Die Brennstoff-Verteilerleitung weist für jedes Brennstoffeinspritzventil ein Aufnahmeelement auf, in welches der Zulaufabschnitt des Brennstoffeinspritzventils einführbar ist, so daß das Aufnahmeelement den Zulaufabschnitt tassenartig umschließt. Um die notwendige Dichtung zu erreichen, weist der Zulaufabschnitt jedes Brennstoffeinspritzventils ein Dichtungselement in Form eines 0-Rings auf, der an der Innenwandung des Aufnahmeelements dichtend anliegt.

Aufgrund des relativ hohen Verbrennungsdrucks in jedem Brennraum der Brennkraftmaschine muß von der Niederhaltevorrichtung eine relativ hohe Niederhaltekraft aufgebracht werden, um die Brennstoffeinspritzventile in ihrer jeweiligen Aufnahmebohrung an dem Zylinderkopf sicher zu arretieren. Die dadurch bedingte starre Fixierung der Brennstoffeinspritzventile an dem Zylinderkopf erschwert jedoch die Montage der Brennstoff-Verteilerleitung, da es aufgrund der Fertigungstoleranzen sowohl der Aufnahmebohrungen für die Brennstoffeinspritzventile an dem Zylinderkopf als auch der Aufnahmeelemente für die Brennstoffeinspritzventile an der Brennstoff-Verteilerleitung zu Positionsabweichungen und Winkelabweichungen zwischen den Zulaufabschnitten der Brennstoffeinspritzventile einerseits und den Aufnahmeelementen der Brennstoff-Verteilerleitung andererseits kommt. Erschwerend kommt hinzu, daß die in den Aufnahmebohrungen des Zylinderkopfes montierten Brennstoffeinspritzventile durch die von den Spannpratzen ausgeübte Niederhaltekraft nicht umfänglich gleichmäßig sondern punktuell beaufschlagt werden, was eine geringfügige Verkippung der Brennstoffeinspritzventile in den Aufnahmebohrungen zur Folge hat. Die sich an den Zulaufabschnitten der Brennstoffeinspritzventile dadurch zusätzlich ergebenden Positionsund Winkelabweichungen erschweren die Montage der Brennstoff-Verteilerleitung zusätzlich. Der zwischen dem Zulaufabschnitt des Brennstoffeinspritzventils und dem Aufnahmeelement der Brennstoff-Verteilerleitung angeordnete O-Ring gleicht die Positions- und Winkelabweichungen nur in einem sehr geringen, unzureichenden Umfang aus. Bei den in der Praxis auftretenden Positions- und Winkelabweichungen besteht bei der aus der JP-OS 08-312503 bekannten Brennstoffeinspritzanlage neben dem Nachteil einer erschwerten Montage auch die Gefahr des Brennstoffaustritts an der die Positions- und Winkelabweichungen nicht ausgleichenden Dichtung.

Aus der DE-OS 29 08 095 ist es bekannt, ein nicht zum direkten Einspritzen von Brennstoff vorgesehenes Brennstoffeinspritzventil an einer Brennstoff-Vertcilerleitung mittels eines Haltebügels zu fixieren und den Zulaufabschnitt des Brennstoffeinspritzventils über einen Stecknippel in die Brennstoff-Verteilerleitung einzuführen. Ein Ausgleich von Positions- und Winkelabweichungen an der Verbindung des Brennstoffeinspritzventils mit der Brennstoff-Verteilerleitung ist bei dieser Montageanordnung nicht vorgesehen und auch nicht erforderlich, da das Brennstoffeinspritzventil in der Aufnahmebohrung des Saugrohrs im Gegensatz zur Montage eines direkt einspritzenden Brennstoffeinspritzventils an dem Zylinderkopf nicht starr fixiert ist, sondern an einem in der Aufnahmebohrung des Saugrohrs vorgesehenen Dichtungselement beweglich ist.

Aus der EP-PS 0 491 582 ist es bekannt, die Brennstoffeinspritzventile an der Brennstoff-Verteilerleitung vor dem Einsetzen in die Aufnahmeöffnungen vorzumontieren. Diese bekannte Brennstoffeinspritzanlage ist jedoch ebenfalls nicht zum direkten Einspritzen von Brennstoff in den Brennraum der Brennkraftmaschine sondern zum indirekten Einspritzen von Brennstoff in das Saugrohr der Brennkraftmaschine geeignet, so daß an die Positionsund Winkeltoleranzen der vormontierten Brennstoffeinspritzventile keine besonderen Anforderungen zu stellen sind.

Aus der US-PS 5,394,850 ist bereits eine Brennstoffeinspritzanlage bekannt, die bei der Saugrohreinspritzung von Benzin zur Anwendung kommt. Die Einspritzventile sind unmittelbar an Saugrohren vor dem Zylinderkopf befestigt. Der Brennstoff wird aus den Einspritzventilen in die Ansaugkanäle auf Einlassventile gespritzt, so dass die Gemischbildung bereits vor den Brennräumen erfolgt. Versorgt werden die Einspritzventile mit Brennstoff über eine Brennstoff-Verteilerleitung, die dem jeweiligen Einspritzventil zugewandt mit einer Aufnahmekammer endet. Die Kammer wird durch zwei radial verlaufende, ringförmige Bereiche nach unten hin abgeschlossen. Beide Radialbereiche weisen eine innere Öffnung auf, die von einem Zwischenstück mit einem Bereich geringeren Durchmessers durchragt werden. Mit einem Bereich größeren Durchmessers erstreckt sich das Zwischenstück über das zulaufseitige Ende des Einspritzventils mit seiner Brennstoff-Einlassöffnung. Über das Zwischenstück wird somit das Einspritzventil mit den Versorgungsöffnungen der beiden Radialbereiche der Brennstoff-Verteilerleitung verbunden. Die Abdichtung dieser Hydraulikverbindung erfolgt über O-Ringe. Während der eine Dichtring in einer Nut am Umfang des Einspritzventils eingebracht ist, wird der zweite Dichtring in die untere Kammer der Brennstoff-Verteilerleitung, die zwischen den beiden Radialbereichen gebildet ist, eingelegt.

Auf diese Weise wird dieser Dichtring durch die Kammerung fixiert. Ein axiales Ausweichen bzw. Verschieben des Dichtrings wird durch die beiden Radialbereiche verhindert.

### Vorteile der Erfindung

Die erfindungsgemäße Brennstoffeinspritzanlage mit den kennzeichnenden Merkmalen des Anspruchs 1 hat demgegenüber den Vorteil, daß Positions- und Winkelabweichungen, die sich aufgrund der Fertigungs-Toleranzen und montagebedingter Toleranzen ergeben, sicher ausgeglichen werden. Dadurch wird die Montage der Brennstoffeinspritzanlage, insbesondere der Brennstoff-Verteilerleitung, wesentlich erleichtert. Eine Verspannung der Brennstoffeinspritzventile oder der Brennstoff-Verteilerleitung, wie sie bei einer Positions- und Winkelabweichungen nicht ausgleichenden Verbindung auftreten können, wird vermieden. Ferner treten keine Dichtungsprobleme zwischen der Brennstoff-Verteilerleitung und den Zulaufabschnitten der Brennstoffeinspritzventile auf, da die Dichtungselemente durch nicht ausgeglichene Positions- und Winkelabweichungen nicht einseitig deformiert werden. Umgekehrt läßt die erfindungsgemäß weitergebildete Brennstoffeinspritzanlage größere Toleranzen bei der Fertigung des Zylinderkopfes und der Brennstoff-Verteilerleitung zu, so daß der Fertigungsaufwand dieser Teile verringert und die Fertigungskosten entsprechend reduziert werden. Die Brennstoff-Verteilerleitung kann relativ nahe am Zylinderkopf montiert werden, so daß ein nur kleiner Bauraum benötigt wird.

Der Verbindungsbereich zwischen der Brennstoff-Verteilerleitung und dem Zulaufabschnitt der Brennstoffeinspritzventile kann im Querschnitt relativ groß bemessen werden, so daß beim Öffnen der Brennstoffeinspritzventile kein Druckeinbruch auftritt.

Durch die in den Unteransprüchen aufgeführten Maßnahmen sind vorteilhafte Weiterbildungen und Verbesserungen der im Anspruch 1 angegebenen Brennstoffeinspritzanlage möglich.

Bei Verwendung von hülsenförmigen, vorzugsweise über eine Rastverbindung mit der Brennstoff-Verteilerleitung und den Zwischenstücken verbindbare Sicherungselemente ergibt sich für eine Brennstoffeinspritzanlage nach Anspruch 1 die Möglichkeit einer Vormontage der Zwischenstücke an der Brennstoff-Verteilerleitung. Die Brennstoff-Verteilerleitung ist mitsamt der über die Sicherungselemente an der Brennstoff-Verteilerleitung gesicherten Zwischenstücke von den Brennstoffeinspritzventilen bei einer Demontage zu Wartungszwecken abziehbar. Ferner ist es vorteilhaft, wenn das Zwischenstück mit seinem Durchmesser so groß bemessen ist, daß vor der Brennstoff-Einlaßöffnung des zugeordneten Brennstoffeinspritzventils ein Druckschwankungen ausgleichendes Brennstoffreservoir gebildet wird. Ein Druckeinbruch beim Öffnen des Brennstoffeinspritzventils wird vermieden, da das Brennstoffreservoir des Zwischenstücks als Zwischenspeicher wirkt und zudem einen ungedrosselten Zufluß des Brennstoffs von der Brennstoff-Verteilerleitung zu der Brennstoff-Einlaßöffnung des zugeordneten Brennstoffeinspritzventils ermöglicht.

### Zeichnung

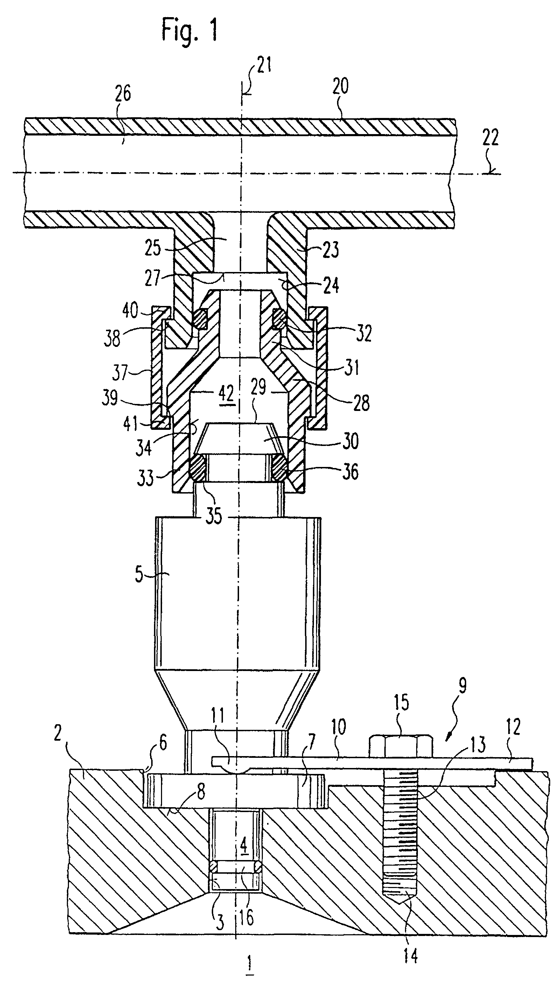

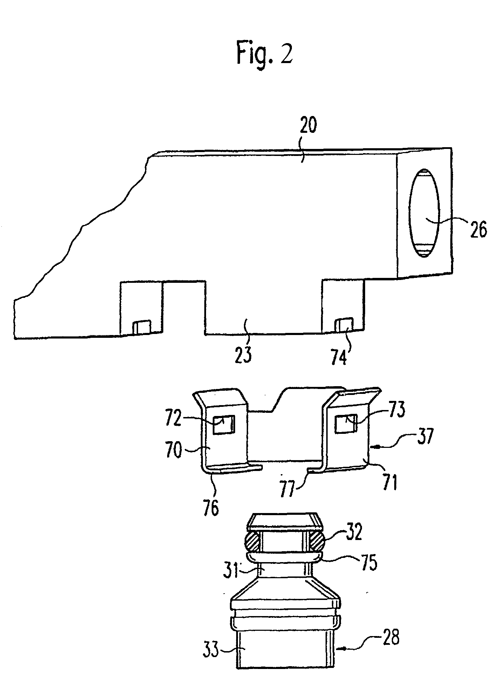

Ausführungsbeispiele der Erfindung sind in der Zeichnung vereinfacht dargestellt und in der nachfolgenden Beschreibung näher erläutert. Es zeigen Fig. 1 ein erstes Ausführungsbeispiel einer auszugsweise dargestellten erfindungsgemäßen Brennstoffeinspritzanlage in einer teilweise geschnittenen Darstellung und Fig. 2 ein zweites Ausführungsbeispiel einer auszugsweise dargestellten erfindungsgemäßen Brennstoffeinspritzanlage in einer perspektivischen Darstellung.

### Beschreibung der Ausführungsbeispiele

Fig. 1 zeigt eine erfindungsgemäße Brennstoffeinspritzanlage entsprechend einem ersten Ausführungsbeispiel in einer nur auszugsweisen und teilweise geschnittenen Darstellung.

Die erfindungsgemäße Brennstoffeinspritzanlage dient zum direkten Einspritzen von Brennstoff in zumindest einen Brennraum, typischerweise jedoch mehrere, z. B. vier Brennräume einer Brennkraftmaschine. In der auszugsweisen Darstellung der Fig. 1 ist lediglich ein Brennraum 1 der Brennkraftmaschine dargestellt, der mittels eines Zylinderkopfes 2 abgeschlossen ist. Der Zylinderkopf 2 weist eine Aufnahmebohrung 3 auf, in welche ein Abspritzabschnitt 4 eines Brennstoffeinspritzventils 5 einsetzbar ist. Dabei ist für jeden Brennraum 1 der Brennkraftmaschine zumindest ein Brennstoffeinspritzventil 5 vorgesehen. Die Aufnahmebohrung 3 ist an einer Ringdichtung 16 gegen die Verbrennungsgase des Brennraums 1 abgedichtet. Auf der dem Brennraum 1 abgelegenen Seite schließt sich an die Aufnahmebohrung 3 eine in dem Zylinderkopf 2 ausgebildete Vertiefung 6 an, die einen Flansch 7 des in die Aufnahmebohrung 3 eingesetzten Brennstoffeinspritzventils 5 aufnimmt.

In dem in Fig. 1 dargestellten Ausführungsbeispiel liegt der Flansch 7 auf einer planen Stützfläche 8 des Zylinderkopfes 2 auf und wird mittels einer in dem Ausführungsbeispiel als Spannpratze 9 ausgebildeten Niederhaltevorrichtung gegen die Stützfläche 8 des Zylinderkopfes 2 gepreßt. Die von der Spannpratze 9 ausgeübte Niederhaltekraft ist dabei größer als die von dem Verbrennungsdruck der Verbrennungsgase in dem Brennraum 1 ausgeübte Gegenkraft, so daß der Abspritzabschnitt 4 des Brennstoffeinspritzventils 5 auch bei hohem Verbrennungsdruck sicher an dem Zylinderkopf 2 fixiert ist.

Die Spannpratze 9 besteht aus einem, z. B. gabelförmig ausgebildeten Spannhebel 10, der an einem Auflageabschnitt 11 auf dem Flansch 7 des Brennstoffeinspritzventils 5 aufliegt. Dabei kann der Spannhebel 10 das Brennstoffeinspritzventil 5 gabelartig so umfassen, daß auch auf der in Fig. 1 rückwärtigen Seite des Brennstoffeinspritzventils 5 ein weiterer Auflageabschnitt auf dem Flansch 7 aufliegt. Der Spannhebel 10 liegt an seinem dem bzw. den Auflageabschnitt(en) 11 gegenüberliegenden Ende 12 auf dem Zylinderkopf 2 auf und wird mittels einer Spannschraube 13, die in eine Gewindebohrung 14 des Zylinderkopfes 2 einschraubbar ist, gegen den Zylinderkopf 2 vorgespannt. An einem, z. B. als Sechskant ausgebildeten Schraubenkopf 15 kann bei der Montage des Brennstoffeinspritzventils 5 an der Spannschraube 13 ein entsprechendes Werkzeug, z. B. ein Schraubenschlüssel, angreifen.

Zur Versorgung des in Fig. 1 dargestellten Brennstoffeinspritzventils 5 und der dem direkten Einspritzen von Brennstoff in die in Fig. 1 nicht dargestellten, weiteren Brennräume der Brennkraftmaschine dienenden, in Fig. 1 ebenfalls nicht dargestellten weiteren Brennstoffeinspritzventile ist eine Brennstoff-Verteilerleitung 20 vorgesehen. Die Brennstoff-Verteilerleitung 20 ist rohrförmig ausgebildet und erstreckt sich entlang einer senkrecht zu der Längsachse 21 des Brennstoffeinspritzventils 5 und der Aufnahmebohrung 3 des Zylinderkopfes 2 orientierten Achse 22. Die Brennstoff-Verteilerleitung 20 ist mit allen Brennstoffeinspritzventilen 5 der Brennstoffeinspritzanlage verbunden und weist an der Position eines jeden Brennstoffeinspritzventils 5 einen Verbindungsstutzen 23 auf, der in Form eines Stufen-Hohlzylinders ausgebildet ist und einen Führungsabschnitt 24 aufweist, welcher über einen Verbindungskanal 25 mit dem Hauptkanal 26 der Brennstoff-Verteilerleitung 20 in Verbindung steht.

In dem Bereich eines jeden Verbindungsstutzens 23 weist die Brennstoff-Verteilerleitung 20 für jedes Brennstoffeinspritzventil 5 eine Brennstoff-Auslaßöffnung 27 auf. An die Brennstoff-Auslaßöffnung 27 der Brennstoff-Verteilerleitung 20 schließt sich stromabwärts ein erfindungsgemäßes Zwischenstück 28 an, welches den Brennstoff einer Brennstoff-Einlaßöffnung 29 an einem Zulaufabschnitt 30 des Brennstoffeinspritzventils 5 zuführt. In dem in Fig. 1 dargestellten Ausführungsbeispiel weist das Zwischenstück 28 einen stromaufwärtigen, verjüngten Abschnitt 31 auf, welcher in den Führungsabschnitt 24 des Verbindungsstutzens 23 einführbar ist und über ein als O-Ring ausgeführtes erstes Dichtungselement 32 gegenüber dem Verbindungsstutzen 23 der Brennstoff-Verteilerleitung 20 abgedichtet ist. Der stromaufwärtige Abschnitt 31 des Zwischenstücks 28 ist in dem Führungsabschnitt 24 des Verbindungsstutzens 23 gleitend verschiebbar, indem das erste Dichtungselement 32 an der Innenwandung des Führungsabschnitts 24 entlanggleitet. Ferner ist das Zwischenstück 28 gegenüber dem Verbindungsstutzen 23 in vorgegebenen Grenzen schwenkbar, wobei der sich beim Verschwenken verändernde Spaltabstand zwischen dem stromaufwärtigen Abschnitt 31 des Zwischenstücks 28 und dem Führungsabschnitt 24 des Verbindungsstutzens 23 durch das erste Dichtungselement 32 ausgeglichen wird.

Das Zwischenstück 28 weist ferner einen stromabwärtigen Abschnitt 33 auf, an dessen Innendurchmesser ein Führungsabschnitt 34 für den Zulaufabschnitt 30 des Brennstofteinspritzventils 5 ausgebildet ist. Der Zulaufabschnitt 30 weist eine Nut 35 für ein im Ausführungsbeispiel als O-Ring 36 ausgebildetes Dichtungselement auf, welches den Spaltabstand zwischen dem stromabwärtigen Abschnitt 33 und dem Zulaufabschnitt 30 des Brennstoffeinspritzventils 5 abdichtet. Der Zulaufabschnitt 30 ist in dem Führungsabschnitt 34 ebenfalls gleitend verschiebbar, indem das Dichtungselement 36 an der Innenwandung des stromabwärtigen Abschnitts 33 des Zwischenstücks 28 entlanggleitet. Ferner ist der Zulaufabschnitt 30 gegenüber dem Zwischenstück 28 in vorgegebenen Grenzen verschwenkbar, wobei das Dichtungselement 36 beim Verschwenken geringfügig deformiert wird und die Veränderung des Spaltabstands zwischen dem stromabwärtigen Abschnitt 33 des Zwischenstücks 28 und dem Zulaufabschnitt 30 des Brennstoffeinspritzventils 5 entsprechend ausgleicht.

Durch die verschiebbare und verschwenkbare Anordnung des Zwischenstücks 28 an dem Verbindungsstutzen 23 einerseits, und die verschiebbare und verschwenkbare Anordnung des Zulaufabschnitts 30 des Brennstoffeinspritzventils 5 an dem Zwischenstück 28 andererseits wird eine gelenkartig abwinkelbare und verkürz- bzw. verlängerbare Teleskopverbindung zwischen der Brennstoff-Verteilerleitung 20 und dem Brennstoffeinspritzventil 5 erzielt, die es ermöglicht, die Brennstoff-Verteilerleitung 20 hochgradig flexibel an den Brennstoffeinspritzventilen 5 zu montieren. Ein fertigungsoder montagebedingter Winkel- oder Positionsversatz des Zulaufabschnitts 30 kann durch die flexible Verbindung mittels des Zwischenstücks 28 in einem weiten Umfang ausgeglichen werden, ohne daß die Dichtungselemente 32 und 36 dabei so weit deformiert werden, daß an den Dichtungselementen 32 und 36 Leckageprobleme auftreten.

Vorzugsweise stimmt der Innen-Durchmesser des Führungsabschnitts 24 des Verbindungsstutzens 23 mit dem Innen-Durchmesser des Führungsabschnitts 34 des Zwischenstücks 28 im wesentlichen überein. Dadurch wird vermieden, daß das Zwischenstück 28 durch den Brennstoffdruck in Richtung der Längsachse 21 mit einer Kraftkomponente beaufschlagt wird, die zu einer ungewollten Verschiebung des Zwischenstücks 28 führen könnte.

Das Zwischenstück 28 kann über ein Sicherungselement 37 an dem zugehörigen Verbindungsstutzen 23 gesichert, bzw. fixiert werden. Das Zwischenstück 28 kann daher an der Brennstoff-Verteilerleitung 20 vormontiert werden, was die Montagefreundlichkeit verbessert. Ferner ist sichergestellt, daß das Zwischenstück 28 bei einem Abziehen der Brennstoff-Verteilerleitung 20 an dem Verbindungsstutzen 23 anhaftet und nicht die Verbindung zwischen dem Zwischenstück 28 und dem Verbindungsstutzen 23 sondern die Verbindung zwischen dem Zwischenstück 28 und dem Zulaufabschnitt 30 des Brennstoffeinspritzventils 5 gelöst wird. Auf diese Weise ist gewährleistet, daß das Zwischenstück 28 bei Montage- und Demontagearbeiten nicht aus dem Verbindungsstutzen 23 herausgezogen wird und verloren gehen kann. Das Sicherungselement 37 ist im Ausführungsbeispiel hülsenförmig ausgebildet und umschließt einen stromabwärtigen Bereich des Verbindungsstutzens 23 und einen stromaufwärtigen Bereich des Zwischenstücks 28 ringförmig. Der Verbindungsstutzen 23 kann eine erste Rastnase 38 und das Zwischenstück 28 eine zweite Rastnase 39 aufweisen, die mit einem ersten innenseitigen Überstand 40 und einem zweiten innenseitigen Überstand 41 des Sicherungselements 37 zu zwei Rastverbindungen zusammenwirken.

Die Brennstoff-Verteilerleitung 20, die Zwischenstücke 28 und die Sicherungselemente 37 können beispielsweise mittels eines Kunststoff-Spritzgußverfahrens aus einem geeigneten Kunststoffmaterial kostengünstig hergestellt werden.

Jedes Zwischenstück 28 kann in seinem Innendurchmesser so groß bemessen sein, daß das Zwischenstück 28 vor der Brennstoff-Einlaßöffnung 29 des Brennstoffeinspritzventils 5 ein Druckschwankungen ausgleichendes Brennstoffreservoir 42 bildet. Ferner ermöglicht der relativ groß bemessene Innendurchmesser des Zwischenstücks 28 einen ungedrosselten Zufluß des Brennstoffs von der Brennstoff-Auslaßöffnung 27 der Brennstoff-Verteilerleitung 20 zu der Brennstoff-Einlaßöffnung 29 des Brennstoffeinspritzventils 5.

Fig. 2 zeigt ein weiteres Ausführungsbeispiel einer erfindungsgemäßen Brennstoffeinspritzanlage in einer ausschnittsweisen, perspektivischen Darstellung. Das Grundkonzept dieses Ausführungsbeispiels entspricht dem anhand von Fig. 1 bereits erläuterten Ausführungsbeispiel. Die Besonderheiten ergeben sich insbesondere aus der Ausgestaltung des Sicherungselements 37 und dessen Rastverbindungen mit der Brennstoff-Verteilerleitung 20 einerseits und mit dem Zwischenstück 28 andererseits. Bereits anhand von Fig. 1 beschriebene Elemente sind mit übereinstimmenden Bezugszeichen versehen, um die Zuordnung zu erleichtern. Auf eine wiederholende Beschreibung kann daher insoweit verzichtet werden.

Das Sicherungselement 37 ist im in Fig. 2 dargestellten Ausführungsbeispiel im wesentlich U-förmig geformt und als Klammer ausgebildet. An den beiden Schenkelabschnitten 70 und 71 des Sicherungselements 37 ist jeweils eine Ausnehmung 72 und 73 vorgesehen, in welche jeweils eine an dem Verbindungsstutzen 23 der Brennstoff-Verteilerleitung 20 vorgesehene Rastnase 74 rastend eingreift. Auf diese Weise ist die rastende Verbindung mit der Brennstoff-Verteilerleitung 20 realisiert.

Das Zwischenstück 28 weist stromabwärts des Dichtungs-Elements 32 einen Wulst 75 auf. Die beiden Schenkelabschnitte 70 und 71 des Sicherungselements 37 weisen jeweils an ihrem stromabwärtigen Ende einen nach innen ragenden Überstand 76 bzw. 77 auf, der beim Zusammenfügen des Sicherungselements 37 mit dem Zwischenstück 28 den Wulst 75 rastend übergreift. Auf diese Weise ist die Rastverbindung zwischen dem Sicherungselement 37 und dem Zwischenstück 28 realisiert.

Durch die erfindungsgemäße Weiterbildung wird die Montagefreundlichkeit der Brennstoffeinspritzanlage wesentlich verbessert. Da an die Fertigungstoleranzen gegenüber einer konventionellen Ausbildung verminderte Anforderungen zu stellen sind, ergeben sich auch verminderte Fertigungskosten für den Zylinderkopf 2 und die Brennstoff-Verteilerleitung 20.

## Patentansprüche

1. Brennstoffeinspritzanlage zum direkten Einspritzen von Brennstoff in zumindest einen Brennraum (1) einer Brennkraftmaschine mit zumindest einem Brennstoffeinspritzventil (5) für jeden Brennraum (1), das jeweils an einem Zulaufabschnitt (30) eine Brennstoff-Einlaßöffnung (29) aufweist, mit einer Brennstoff-Verteilerleitung (20), die für jedes Brennstoffeinspritzventil (5) eine mit der Brennstoff-Einlaßöffnung (29) des Brennstoffeinspritzventils (5) verbindbare Brennstoff-Auslaßöffnung (27) aufweist, und mit einem zwischen der Brennstoff-Einlaßöffnung (29) jedes Brennstoffeinspritzventils (5) und der zugeordneten Brennstoff-Auslaßöffnung (27) angeordneten, rohrförmigen Zwischenstück (28), welches mit der Brennstoff-Einlaßöffnung (29) des zugeordneten Brennstoffeinspritzventils (5) und der Brennstoff-Auslaßöffnung (27) der Brennstoff-Verteilerleitung (20) dichtend und in vorgegebenen Grenzen beweglich verbindbar ist, so daß der Zulaufabschnitt (30) des Brennstoffeinspritzventils (5) über das Zwischenstück (28) an der Brennstoff-Verteilerleitung (20) flexibel montierbar ist,
**dadurch gekennzeichnet, daß** das mindestens eine Brennstoffeinspritzventil jeweils an einem Abspritzabschnitt (4) in eine zugeordnete, an einem Zylinderkopf (2) der Brennkraftmaschine ausgebildete Aufnahmebohrung (3) einsetzbar ist
und daß die Brennstoff-Verteilerleitung (20) für jedes Brennstoffeinspritzventil (5) jeweils im Bereich der Brennstoff-Auslaßöffnung (27) einen Verbindungsstutzen (23) aufweist und jedes Zwischenstück (28) ein erstes Dichtungselement (32) aufweist, das in einem Führungsabschnitt (24) des zugeordneten Verbindungsstutzens (23) gleitend verschiebbar ist.

2. Brennstoffeinspritzanlage nach Anspruch 1,
**dadurch gekennzeichnet,**
**daß** das erste Dichtungselement (32) in einer Nut am Umfang des Zwischenstücks (28) eingebracht ist.

3. Brennstoffeinspritzanlage nach Anspruch 1 oder 2,
**dadurch gekennzeichnet,**
**daß** jedes Zwischenstück (28) an dem ersten Dichtungselement (32) in vorgegebenen Grenzen schwenkbar gelagert ist.

4. Brennstoffeinspritzanlage nach Anspruch 1, 2 oder 3,
**dadurch gekennzeichnet,**
**daß** jeder Verbindungsstutzen (23) der Brennstoff-Verteilerleitung (20) einen stromaufwärtigen Abschnitt (31) des zugeordneten Zwischenstücks (28) ringförmig umschließt.

5. Brennstoffeinspritzanlage nach einem der Ansprüche 1 bis 4,
**dadurch gekennzeichnet,**
**daß** jedes Zwischenstück (28) über jeweils ein hülsenförmiges Sicherungselement (37) an der Brennstoff-Verteilerleitung (20) fixiert ist.

6. Brennstoffeinspritzanlage nach Anspruch 5,
**dadurch gekennzeichnet,**
**daß** jedes Sicherungselement (37) mit der Brennstoff-Verteilerleitung (20) und/oder mit dem zugeordneten Zwischenstück (28) über eine Rastverbindung (40, 38; 41, 39) rastend verbindbar ist.

7. Brennstoffeinspritzanlage nach einem der Ansprüche 1 bis 6,
**dadurch gekennzeichnet,**
**daß** der Zulaufabschnitt (30) jedes Brennstoffeinspritzventils (5) ein zweites Dichtungselement (36) aufweist, das in einem Führungsabschnitt (34) des zugeordneten Zwischenstücks (28) gleitend verschiebbar ist.

8. Brennstoffeinspritzanlage nach Anspruch 7,
**dadurch gekennzeichnet,**
**daß** der Zulaufabschnitt (30) jedes Brennstoffeinspritzventils (5) an dem zweiten Dichtungselement (36) in vorgegebenen Grenzen schwenkbar gelagert ist.

9. Brennstoffeinspritzanlage nach einem der Ansprüche 1 bis 8,
**dadurch gekennzeichnet,**
**daß** ein stromabwärtiger Abschnitt (33) jedes Zwischenstücks (28) den Zulaufabschnitt (30) des zugeordneten Brennstoffeinspritzventils (5) ringförmig umschließt.

10. Brennstoffeinspritzanlage nach einem der Ansprüche 1 bis 9,
**dadurch gekennzeichnet,**
**daß** jedes rohrförmige Zwischenstück (28) in seinem Innendurchmesser so groß bemessen ist, daß das Zwischenstück (28) vor der Brennstoff-Einlaßöffnung (29) des zugeordneten Brennstoffeinspritzventils (5) ein Druckschwankungen ausgleichendes Brennstoffreservoir (42) bildet.

## Claims

1. Fuel injection system for the direct injection of fuel into at least one combustion space (1) of an internal combustion engine, with at least one fuel injection valve (5) for each combustion space (1), which fuel injection valve has in each case a fuel inlet orifice (29) on an inflow portion (30), with a fuel distributor line (20) which for each fuel injection valve (5) has a fuel outlet orifice (27) connectable to the fuel inlet orifice (39) of the fuel injection valve (5), and with a tubular intermediate piece (28) which is arranged between the fuel inlet orifice (29) of each fuel injection valve (5) and the associated fuel outlet orifice (27) and which is sealingly connectable, so as to be moveable within predetermined limits, to the fuel inlet orifice (29) of the associated fuel injection valve (5) and to the fuel outlet orifice (27) of the fuel distributor line (20), so that the inflow portion (30) of the fuel injection valve (5) can be mounted flexibly on the fuel distributor line (20) via the intermediate piece (28), **characterized in that** the at least one fuel injection valve can be inserted in each case at an injection portion (4) into an associated receiving bore (3) formed on a cylinder head (2) of the internal combustion engine, and **in that** the fuel distributor line (20) for each fuel injection valve (5) has a connection piece (23) in each case in the region of the fuel outlet orifice (27), and each intermediate piece (28) has a first sealing element (32) which is slideably displaceable in a guide portion (24) of the associated connection piece (23).

2. Fuel injection system according to Claim 1, **characterized in that** the first sealing element (32) is introduced in a groove on the circumference of the intermediate piece (28).

3. Fuel injection system according to Claim 1 or 2, **characterized in that** each intermediate piece (28) is mounted on the first sealing element (32) so as to be pivotable within predetermined limits.

4. Fuel injection system according to Claim 1, 2 or 3, **characterized in that** each connection piece (23) of the fuel distributor line (20) annularly surrounds an upstream portion (31) of the associated intermediate piece (28).

5. Fuel injection system according to one of Claims 1 to 4, **characterized in that** each intermediate piece (28) is fixed to the fuel distributor line (20) in each case via a sleeve-shaped securing element (37).

6. Fuel injection system according to Claim 5, **characterized in that** each securing element (37) is connectable to the fuel distributor line (20) and/or to the associated intermediate piece (28) interlockingly via an interlocking connection (40, 38;41, 39).

7. Fuel injection system according to one of Claims 1 to 6, **characterized in that** the inflow portion (30) of each fuel injection valve (5) has a second sealing element (36) which is slideably displaceable in a guide portion (24) of the associated intermediate piece (28).

8. Fuel injection system according to Claim 7, **characterized in that** the inflow portion (30) of each fuel injection valve (5) is mounted on the second sealing element (36) so as to be pivotable within predetermined limits.

9. Fuel injection system according to one of Claims 1 to 8, **characterized in that** a downstream portion (33) of each intermediate piece (28) annularly surrounds the inflow portion (30) of the associated fuel injection valve (5).

10. Fuel injection system according to one of Claims 1 to 9, **characterized in that** the inside diameter of each tubular intermediate piece (28) is dimensioned such that the intermediate piece (28) forms, upstream of the fuel inlet orifice (29) of the associated fuel injection valve (5), a fuel reservoir (42) which compensates pressure fluctuations.

## Revendications

1. Installation d'injection de carburant pour injecter directement du carburant dans au moins une chambre de combustion (1) d'un moteur à combustion interne, comportant au moins un injecteur (5) associé à chaque chambre de combustion (1), et muni d'un segment d'alimentation (30) avec un orifice d'entrée de carburant (29), une conduite de distribution de carburant (20) comportant pour chaque injecteur (5) un orifice de sortie de carburant (27) qui peut se relier à l'orifice d'entrée de carburant (29) de chaque injecteur (5), avec
une pièce intermédiaire (28) tubulaire, installée entre l'orifice d'entrée de carburant (29) de chaque injecteur (5) et l'orifice de sortie de carburant (27) associé, cette pièce intermédiaire (28) étant une pièce tubulaire reliée de manière étanche à l'orifice d'entrée de carburant (29) de l'injecteur associé (5) et à l'orifice de sortie (27) de la conduite de distribution de carburant (20) en pouvant se déplacer dans des limites prédéterminées de sorte que le segment d'alimentation (30) de l'injecteur (5) se monte de manière souple par la pièce intermédiaire (28) sur la conduite de distribution de carburant (20),
**caractérisée en ce qu'**
au moins un injecteur de carburant se monte avec un segment d'éjection (4) dans un perçage de réception (3) réalisé dans la culasse (2) du moteur, et
pour chaque injecteur (5), chaque fois au niveau de l'orifice de sortie de carburant (27), la conduite de distribution de carburant (20) comporte un ajutage de liaison (23), et chaque pièce intermédiaire (28) comporte un premier élément d'étanchéité (32) qui peut coulisser en glissant dans un segment de guidage (24) de l'ajutage de liaison correspondant (23).

2. Installation d'injection de carburant selon la revendication 1,
**caractérisée en ce que**
le premier élément d'étanchéité (32) est placé dans une rainure à la périphérie de la pièce intermédiaire (28).

3. Installation d'injection de carburant selon l'une quelconque des revendications 1 ou 2,
**caractérisée en ce que**
chaque pièce intermédiaire (28) est montée pivotante dans des limites prédéterminées sur le premier élément d'étanchéité (32).

4. Installation d'injection de carburant selon l'une quelconque des revendications 1, 2, 3,
**caractérisée en ce que**
chaque ajutage de liaison de la conduite de distribution de carburant (20) entoure de façon annulaire un segment amont (31) de la pièce intermédiaire (28) associée.

5. Installation d'injection de carburant selon l'une quelconque des revendications 1 à 4,
**caractérisée en ce que**
chaque pièce intermédiaire (28) se bloque chaque fois par un élément de fixation en forme de douille (37) sur la conduite de distribution de carburant (20).

6. Installation d'injection de carburant selon la revendication 5,
**caractérisée en ce que**
chaque élément de fixation (37) peut être relié par encliquetage à la conduite de distribution de carburant (20) et/ou à la pièce intermédiaire (28) associée par une liaison par encliquetage (40, 38 ; 41, 39).

7. Installation d'injection de carburant selon l'une quelconque des revendications 1 à 6,
**caractérisée en ce que**
le segment d'alimentation (30) de chaque injecteur (5) comporte un second élément d'étanchéité (36) qui coulisse de manière glissante dans le segment de guidage (34) de la pièce intermédiaire (28) associée.

8. Installation d'injection de carburant selon la revendication 7,
**caractérisée en ce que**
le segment d'alimentation (30) de chaque injecteur (5) est monté pivotant dans des limites prédéterminées sur le second élément d'étanchéité (36).

9. Installation d'injection de carburant selon l'une quelconque des revendications 1 à 8,
**caractérisée en ce qu'**
un segment aval (33) de chaque pièce intermédiaire (28) entoure de manière annulaire le segment d'alimentation (30) de l'injecteur de carburant (5) associé.

10. Installation d'injection de carburant selon l'une quelconque des revendications 1 à 9,
**caractérisée en ce que**
chaque pièce intermédiaire tubulaire (28) a un diamètre intérieur suffisant pour que la pièce intermédiaire (28) forme, en amont de l'orifice d'entrée de carburant (29) de l'injecteur associé (5), un réservoir de carburant (42) qui compense les variations de pression.
